# EUROPEAN PATENT APPLICATION

(11) **EP 0 709 997 A2**
(43) Date of publication of application: **01.05.1996**
(21) Application number: 95307425.9
(22) Date of filing: 18.10.1995
(51) Int. Cl.: H04M 3/50, H04N 7/00

(54) **Broadband network telemarketing system having agent access and control**

(30) Priority: 31.10.1994 US 332225
(71) Applicant: AT&T Corp., New York, NY 10013-2412 (US)
(72) Inventor: Baechle, Michael A., Randolph, New Jersey 07869 (US); Krueger, Robert P., Fair Haven, New Jersey 07704 (US); Conn, Gerard, Brooklyn, New York 11217 (US); Lesch, Vincent, Red Bank, New Jersey 07701 (US); Moroses, Susanne, Monmouth Beach, New Jersey 07750 (US); Sheth, Smita P., Marlboro, New Jersey 07746 (US)
(74) Representative: Watts, Christopher Malcolm Kelway, Dr.

(57) **Abstract**

A method and apparatus for broadband network telemarketing. The invention enables a customer to initiate contact with a telemarketing agent. A connection is established enabling signaling, audio, video and data communication between the customer and agent. The connection also allows the agent to take control of the display of the customer's television, to pass control of the display of the customer's television back to the customer.

## Description

### TECHNICAL FIELD

This invention relates to a method and apparatus for broadband network telemarketing, and specifically for providing customer assistance through access to telemarketing agents.

### BACKGROUND OF THE INVENTION

Telemarketing is the use of telecommunications services to market and sell products and services and to provide customers with product and service information. Broadband networks have been used for telemarketing.

Interactive television ("ITV") is one service available via broadband networks. ITV provides customers with access to a variety of interactive services through their television ("TV"). ITV services are similar to online computer services except that they are accessed through the customer's TV and provide a combination of audio, full motion, full color video and still images. ITV services may include, but are not limited to, video on demand, interactive games and interactive home shopping.

ITV will greatly enhance the telemarketing of products and services. For example, while existing cable TV systems have networks providing home shopping, those networks ordinarily operate on a fixed schedule and customers can only order products or services that are displayed. ITV will alleviate the need for home shopping programming. Home shopping with ITV will be totally automated and customers will be able to browse through and purchase products and services at their convenience.

Although automation of home shopping with ITV will make home shopping easier, some customers may want to ask questions regarding particular products and services or may need assistance in finding and purchasing products or services desired. In addition, product and service vendors may want to have telemarketing agents available to act as sales consultants for ITV home shopping customers.

### SUMMARY OF THE INVENTION

The above problems are solved according to the invention by providing a broadband network system that enables a customer to initiate contact with a telemarketing agent (the agent). When the customer requests agent assistance: an audio and video connection is established between the customer, the agent and the broadband network server; customer information is transmitted to the agent; and the agent can share control of the customer's TV.

Using the invention, the agent has the ability to act as a sales consultant to the customer. The agent can, for example, view the products and services on the customer's TV and answer the customer's questions regarding those products and services.

If the customer needs help finding or selecting products and services from the broadband network server's database, the agent can: question the customer to qualify the customer's needs; browse through the vendor's inventory of products and services out of sight of the customer; select appropriate products and services from the vendor's inventory for display to the customer; and display those selected products and services to the customer.

The agent may access the customer's current orders and the types of products and services the customer has already looked through to avoid showing the customer products and services the customer has already seen. The agent may also access a customer profile which may assist the agent in selecting products to show the customer.

To display products and services to the customer, the agent can take control of the display on the customer's TV and transmit video images to the customer's TV. The control of the customer's TV can be passed back to the customer so that the customer can control the display of products and services that the agent is viewing.

Finally, the agent can assist the customer in placing an order. The agent can add to, revise or change the customer's order form. The agent can also display the customer's order form to the customer by taking control of the display on the customer's TV and sending the order form to the customer's TV.

### BRIEF DESCRIPTION OF THE DRAWINGS

FIG. 1 is a block diagram of an illustrative embodiment of the invention.

FIGS. 2 and 3 are a flow diagrams illustrating the processing of a customer request for assistance according to the principles of the invention.

### DETAILED DESCRIPTION

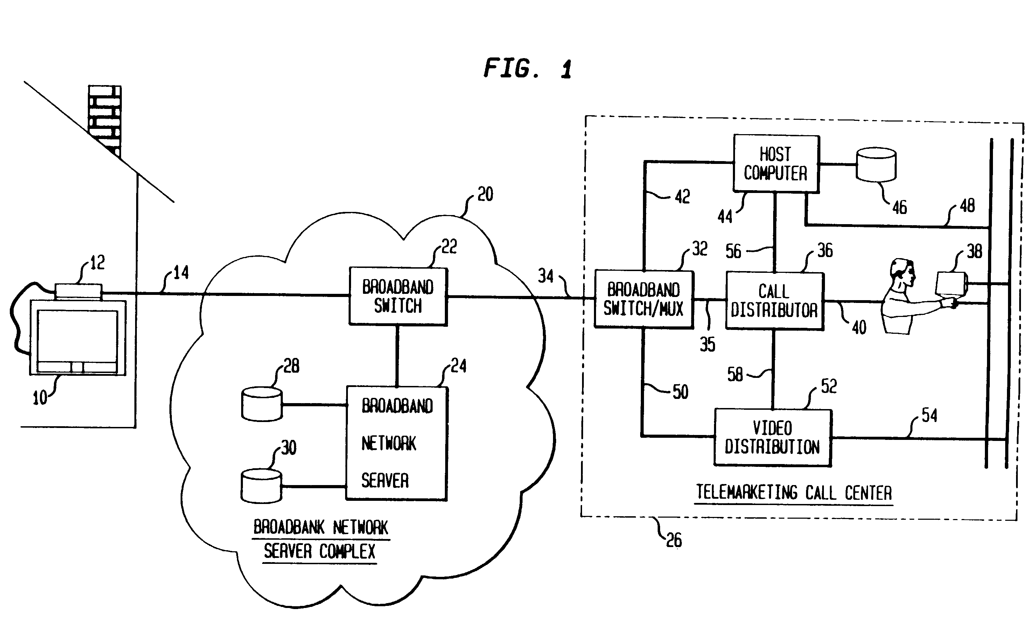

FIG. 1 is a block diagram of an exemplary embodiment of the invention. A customer's TV (10) is connected through a digital set top box (12) and a broadband transmission link (14) to a broadband network server complex (20). The broadband network server complex (20) includes a broadband switch (22) that is connected to a broadband network server (24) and that is also connected to a telemarketing call center (26). The broadband network server (24) includes a multimedia call distributor.

In normal operation, the customer's TV (10) is connected through the broadband switch (22) to the broadband network server (24) and the customer can select from any of the services provided by the broadband network server.

The broadband network server (24) as shown includes an ITV home shopping capability having a customer order database (28) and a multimedia database (30). The customer can select the home shopping capability provided by the broadband network server (24) and can enter the multimedia database (30) consisting of a cataloguing of products and services available from various vendors. The customer can browse through those products and services and order products and services using his TV. Customer orders are entered into the customer order database (28).

The telemarketing call center (26) includes a broadband switch/multiplexer (32) that is connected via a broadband digital link (34) to the broadband switch (22). The broadband switch/multiplexer (32) demultiplexes the signal from the broadband digital link (34) into signaling, audio, data, and video signals.

The audio signal is sent via an audio link (35) to a call distributor (36) that connects the audio signal to an agent's station (38) via link (40). The audio connection enables voice communication between the customer and agent and additional audio communication, for example background music, between the customer, the agent and the broadband network server (24) .

The data signal is sent via a data link (42) to a host computer (44). The host computer can store that data in a customer order database (46) and conveys that data to the agent's station (38) via a data link (48). The data connection enables data transfer, for example order information, between customer's TV (10), the agent's station (38) and the broadband network server (24). The agent can access the customer's current orders, a customer profile and a list of the types of products and services the customer has already looked through.

The video signal is sent via a video link (50) to a video distributor (52). The video distributor (52) connects the video to the agent's station (38) via a video link (54). The video connection enables video between the customer, the agent and the broadband network server (24), for example, simultaneous display at the customer's TV and the agent's station of products and services in the broadband network server's database. The video connection can also enable video communication between the customer and agent, for example windows at the customer's TV (10) and the agent's station (38) that displays the other's face.

The agent's station (38) is connected via link (40) to call distributor (36) which is in turn connected to the broadband switch/multiplexer (32), the host computer (44) and video distributor (52) via suitable links (35, 56, 58). The agent and customer are connected through the broadband network server (24), and, in particular, the multimedia call distributor, such that signaling, audio, video and data signals can be sent between the agent station (38) and the customer's TV (10) and thereby allowing the agent to control the audio, video and data appearing on the customer's TV (10).

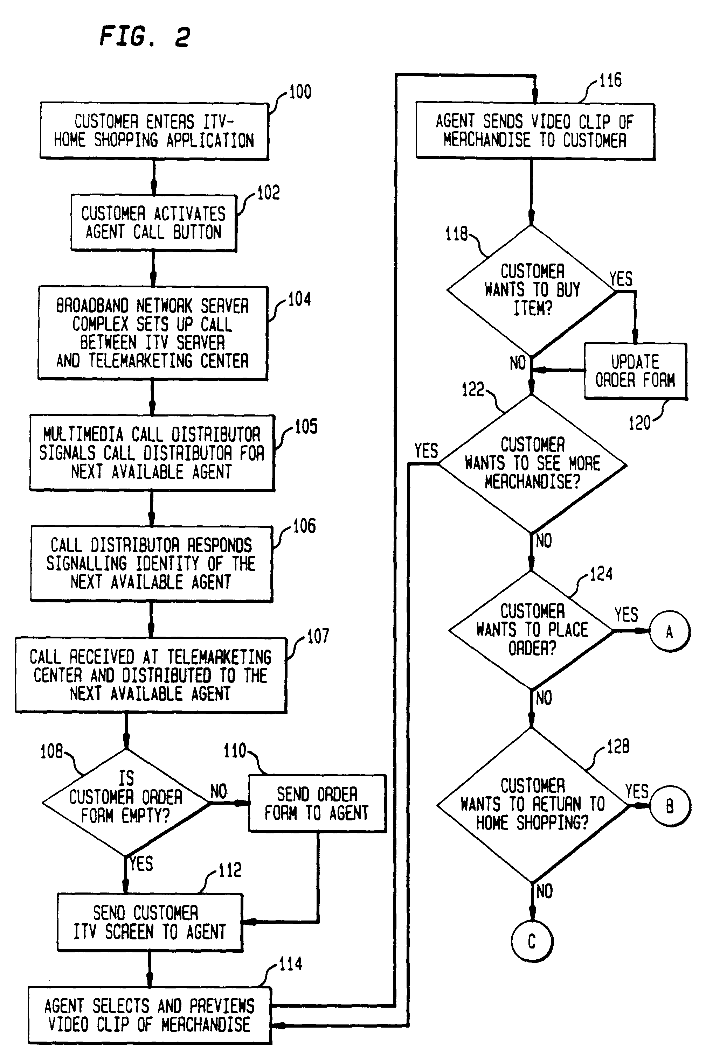

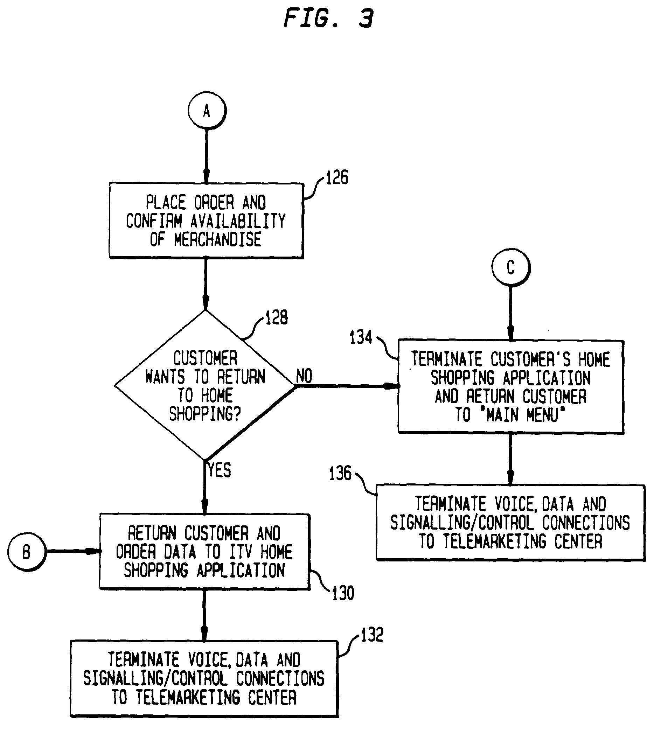

FIGS. 2 and 3 are flow diagrams illustrating the method for processing a customer request for assistance in accordance with the invention. A typical step sequence includes: the customer interaction with a broadband network ITV home shopping capability (step 100); the customer's request for agent assistance (step 102); the customer and agent conversing; the agent views the customers current orders and the display on the customer TV; the agent previews products and services in the vendor's inventory out of sight of the customer; the agent takes control of customer's TV and sends video images of selected products and services to the customer's TV; and termination of the customer and agent connection.

More particularly, from a broadband network main menu which appears on the customer's TV, the customer selects an ITV home shopping application (100). Using the customer's TV (10) is connected to the broadband network server ITV home shopping complex (20) via link (14). The customer is free to browse through a catalog of products and services being offered by various vendors on the ITV home shopping capability and can order those products and services. The customer can maintain a list of ordered products and services and can add to, review, confirm, deny or change his orders.

The broadband network server's system (24) can be provided with an on-line customer profile containing for example, customer's name, credit card information and mailing address. The customer can also access the customer profile and verify its accuracy before placing an order through the ITV connection. A password may also be provided so that the customer's identity can be verified before he places an order or access his information. The customer can update, confirm or enter a customer profile and enter, update, change his password.

The customer may request agent assistance at any time. Having a question about a product or service or otherwise needing assistance, the customer can request agent assistance by activating an agent call button (step 102). The agent call button can take the form of a "hard" button on a customer's TV or remote control device or box (12) or a "soft" button on the customer's TV. Upon activation of the agent call button, the broadband network server complex places a call to the telemarketing center (104). Based on the vendor and the products and services that the customer is browsing, the multimedia call distributor identifies the appropriate telemarketing center and group within the telemarketing center to which to direct the call.

The broadband network server's multimedia call distributor signals the call distributor in the telemarketing call center to determine the next available agent (105). The call distributor responds with a signal identifying the next available agent (106). A call is placed to the telemarketing center and is routed to the next available agent (107). The call enables signaling, audio, video and data signals to be transmitted between the agent's station and customer's TV.

The agent's station has a customer window display and a preview display. The customer window display allows the agent to see and hear that which is displayed on the customer's TV. If the customer has placed any orders, the customer's order form is also sent to the agent and appears on the agent's customer window display (108, 110). The display appearing on the customer's TV is sent to the agent and appears on the agent's customer window display (112). In addition to allowing the agent to view the images, video clips, or text displayed on the customer's display, the customer window display also allows the agent to hear any background audio that the customer hears.

The agent can review the customer's order form and the products displayed on the customer's TV while talking to the customer. The agent can see what the customer is viewing on his TV and answer the customer's questions regarding the products or services displayed.

If the customer needs help finding or selecting products, the agent can provide assistance using the preview display. The agent can ask the customer questions to qualify his needs and then preview products and services from the broadband network server's database (step 114) to satisfy the customer's needs. The agent's preview display allows the agent to browse through products and services from the broadband network server's database out of sight of the customer. The agent can navigate and browse through the same products and services available to customers on the broadband network server's database and preview them before displaying them to the customer.

Before browsing through the broadband network server's database, the agent can review the customer's order form and the types of products the customer has looked through to avoid showing the customer products and services that he has already ordered or seen. The agent can also review the customer's profile for information that might indicate the customer's preferences.

The agent may also have access to information not available to the customer, such as inventory information and upcoming sales information.

After previewing products and services from the broadband network server's database, the agent can select certain products and services from the broadband network server's database and send video of those products and services to the customer for display on his TV (step 116). The agent can take control of the customer's TV, controlling the display on the customer's TV, and display those selected products and services on the customer's TV. The agent may elect to pass control of the customer's TV to the customer so the customer can show the agent particular products and services.

The taking and passing of control between the agent and the customer can take the form of shared control, alternating control or agent controlled sharing of control. In the shared control mode, both the agent and customer can issue navigation commands to the broadband network server at the same time to control the display at the customer's TV and the agent's station. In the alternating control mode, either the agent or the customer can issue navigation commands to the broadband network server, one at a time, to control the screen display at the customer's TV and the agent's station. In this mode, whoever is in control, the agent or the customer, can pass control to other. In the agent controlled sharing of control mode, either the agent or the customer can issue navigation commands to the broadband network server, one at a time, to control the screen display at the customer's TV and the agent's station also. However, the agent decides who is in control and can take control from the customer or give control to the customer at will.

If the customer would like to buy a product or service shown to him by the agent, the agent can add the product or service to the customer's order form (steps 118, 120). If the customer does not want to buy a product or service shown to him by the agent, the agent can preview, select, and show the customer additional products and services (step 122). After the customer has reviewed all the products or services previewed and selected by the agent or has found the product or service he desires, the agent can place the customer's order and confirm the availability of the products or services (steps 124, 126). The agent can add to an order form already compiled by the customer or create a new order form. The agent can also retrieve the customer profile, verify the customer profile and verify the customer password.

The agent then either returns the customer to the broadband network server ITV home shopping capability and terminates signaling, audio, data and video connections between the customer and telemarketing center (steps 128, 130, 132) or returns the customer to the broadband network main menu by terminating the customer's connection to the broadband network server's ITV home shopping network and terminating signaling, audio, data and video connections between the customer and telemarketing center (steps 134, 136).

It is to be understood that the above description is only of one preferred embodiment of the invention. Numerous other arrangements may be devised by one skilled in the art without departing from the scope of the invention. The invention is thus limited only as defined in the accompanying claims.

## Claims

1. A method for providing assistance to a broadband network customer in a broadband network system comprising a customer television (TV), a broadband network server complex including a broadband network server and a switch, and a call center including an agent station, comprising the steps of:
establishing a first connection between a customer TV and a broadband network server station through a switch;
establishing a second connection between the customer TV, an agent station and the broadband network server station through the switch responsive to activation of an agent call means; and
enabling controlling of the customer TV from the agent station.

2. The method of claim 1, wherein the first and second connections involve an interactive television home shopping application.

3. The method of claim 2, further comprising the steps of:
responsive to establishing the second connection, transmission of customer information, including an order form, to the agent station; and
display of the customer information, including the order form, at the agent station.

4. The method of claim 2, further comprising the steps of:
responsive to establishing the second connection, transmission of a video display appearing on the customer TV to the agent station; and
display of the video display appearing at the customer TV at the agent station.

5. The method of claim 1 further comprising the steps of:
responsive to establishing the second connection, previewing at the agent station information stored at the broadband network server.

6. The method of claim 1, wherein enabling controlling of the customer TV from the agent station includes directing the broadband network server to send audio signals to the customer TV.

7. The method of claim 1, wherein enabling controlling of the customer TV from the agent station includes directing the broadband network server to send video signals to the customer TV.

8. The method of claim 1, wherein enabling controlling of the customer TV from the agent station includes directing the broadband network server to send data signals to the customer TV.

9. The method of claim 1, further comprising the steps of:
terminating the second connection; and returning the customer TV to connection with the broadband network server through the switch.

10. The method of claim 1, further comprising the steps of:
placing an order at the agent station; and transmitting that order to the customer TV.

11. A method for providing assistance to a broadband network customer in a broadband network system comprising a customer television (TV), a broadband network server, and a call center including an agent station, comprising the steps of:
establishing a connection between a customer TV, an agent station and a broadband network server; and
enabling sharing of control of the customer TV at the agent station.

12. The method of claim 11, wherein the connection involves an interactive television home shopping application.

13. The method of claim 11, further comprising the steps of:
transmission of customer information, including an order form, to the agent station; and
display of the customer information, including the order form, at the agent station.

14. The method of claim 11, further comprising the steps of:
transmission of a video display appearing at the customer TV to the agent station; and
display of the video display appearing at the customer TV at the agent station.

15. The method of claim 11, further comprising the steps of:
previewing at the agent station information stored at the broadband network server.

16. The method of claim 11, wherein enabling sharing of control of the customer TV at the agent station includes directing the broadband network server to send audio signals from the agent station to the customer TV.

17. The method of claim 11, wherein enabling sharing of control of the customer TV at the agent ITV station includes directing the broadband network server to send video signals from the agent station to the customer TV.

18. The method of claim 11, wherein enabling sharing of control of the customer TV and the agent station includes directing the broadband network server to send data signals from the agent station to the customer TV.

19. The method of claim 11, further comprising the steps of:
terminating the connection between the customer TV, the agent station and the broadband network server; and
connecting the customer TV with the broadband network server.

20. The method of claim 11, further comprising the steps of:
placing an order at the agent station; and
transmitting that order to the customer TV.

21. An apparatus for providing assistance to a broadband network customer in a broadband network system comprising a customer television (TV), a broadband network server complex including a broadband network server and a switch, and a call center including an agent station, comprising:
a means for establishing a first connection between a customer TV and a broadband network server through a switch;
a means for establishing a second connection between the customer TV, an agent station and the broadband network server through the switch; and
a means for enabling controlling of the customer TV from the agent station.

22. The apparatus of claim 21, wherein the first and second connections involve an ITV home shopping application.

23. The apparatus of claim 21, further comprising:
a means for transmission of customer information, including an order form, to the agent station; and
a means for display of the customer information, including the order form, at the agent station.

24. The apparatus of claim 21, further comprising:
a means for transmission of a video display appearing on the customer TV to the agent station; and
a means for display of the video display appearing at the customer TV at the agent station.

25. The apparatus of claim 21 further comprising:
a means for previewing at the agent ITV station information stored at the broadband network server.

26. The apparatus of claim 21, wherein the means for enabling controlling of the customer TV from the agent station includes directing the broadband network server to send audio signals to the customer's TV.

27. The apparatus of claim 21, wherein the means for enabling controlling of the customer TV from the agent station includes directing the broadband network server to send video signals to the customer TV.

28. The apparatus of claim 21, wherein the means for enabling controlling of the customer TV from the agent ITV station includes directing the broadband network server to send data signals to the customer TV.

29. The apparatus of claim 1, further comprising:
a means for terminating the second connection; and
a means for returning the customer TV to connection with the broadband network server through the switch.

30. The apparatus of claim 1, further comprising:
a means for placing an order at the agent station; and
a means for transmitting that order to the customer TV.

31. An apparatus for providing assistance to a broadband network customer in a broadband network system comprising a customer television (TV), a broadband network server, and a call center including an agent station, comprising:
a means for establishing a connection between a customer TV, an agent station and a broadband network server; and
a means for enabling sharing of control of the customer TV at the agent station.

32. The apparatus of claim 31, further comprising:
a means for transmission of customer information, including an order form, to the agent station; and
a means for display of the customer information, including the order form, at the agent station.

33. The apparatus of claim 31, further comprising:
a means for transmission of a video display appearing at the customer TV to the agent station; and
a means for display of the video display appearing at the customer TV at the agent station.

34. The apparatus of claim 31, further comprising:
a means for previewing at the agent station information stored at the broadband network server.

35. The apparatus of claim 31, further comprising:
a means for browsing at the agent station through information stored at the broadband network server.

36. The apparatus of claim 31, wherein the means for enabling sharing of control of the customer TV at the agent station includes directing the broadband network server to send audio signals from the agent station to the customer TV.

37. The apparatus of claim 31, wherein the means for enabling sharing of control of the customer TV at the agent station includes directing the broadband network server to send video signals from the agent station to the customer TV.

38. The apparatus of claim 31, wherein the means for enabling sharing of control of the customer TV at the agent station includes directing the broadband network server to send data signals from the agent station to the customer TV.

39. The apparatus of claim 36, further comprising:
a means for terminating the connection between the customer TV, the agent station and the broadband network server; and
a means for connecting the customer TV the broadband network server.

40. The apparatus of claim 36, further comprising:
a means for placing an order at the agent station; and
a means for transmitting that order to the customer TV.
